# EUROPÄISCHE PATENTSCHRIFT

(11) **EP 0 992 516 B1**
(45) Veröffentlichungstag und Bekanntmachung des Hinweises auf die Patenterteilung: **15.10.2008**
(21) Anmeldenummer: 99110599.0
(22) Anmeldetag: 01.06.1995
(51) Int. Cl.: C08F 10/00, C07F 17/00

(54) **Uebergangsmetallverbindung**
Transition-metal complexes
Complexes de métaux de transition

(30) Priorität: 13.06.1994 DE 4420456
(43) Veröffentlichungstag der Anmeldung: 12.04.2000
(62) Teilanmeldung aus: 95108411.0
(73) Patentinhaber: Basell Polyolefine GmbH, 50389 Wesseling (DE)
(72) Erfinder: Aulbach, Michael Dr., 43206 Reus (ES); Bachmann, Bernd Dr., 65817 Eppstein (DE); Küber, Frank, 61440 Oberursel (DE); Erker, Gerhard, Prof. Dr., 48159 Münster (DE); Temme, Bodo, DCh., Lague City, TX 77573 (US)

(56) Entgegenhaltungen:
- EP-A- 0 344 887
- EP-A- 0 420 436
- EP-A- 0 528 287
- EP-A- 0 530 908
- EP-A- 0 549 900
- EP-A- 0 587 143
- WO-A-96/04290
- US-A- 4 567 244
- US-A- 5 198 401
- G. ERKER ET AL.: "(s-trans-eta4-Dien)zirconocen-Komplexe" CHEMISCHE BERICHTE, Bd. 115, 1982, Seiten 3300-3310, XP002212053
- KRUEGER C ET AL: "THE REMARKABLE FEATURES OF (ETA4-CONJUGATED DIENE)ZIRCONOCENE AND -HAFNOCENE COMPLEXES" , ADVANCES IN ORGANOMETALLIC CHEMISTRY, ORLANDO, ACADEMIC PRESS, US, VOL. VOL. 24, PAGE(S) 1-39 XP000647554 Schemata 1,2,4; Verbindungen 3-5,11, 5l, 16b, 18,30,17,31, 5e,4e, 17e,35 * Abbildung 2; Tabelle II *
- DATABASE CA [Online] CHEMICAL ABSTRACTS SERVICE, COLUMBUS, OHIO, US; BUCHWALD, STEPHEN L. ET AL: "Synthesis of (alkoxymethyl)zirconocene chlorides: stereochemistry of carbon-carbon bond formation in a zirconocene-Wittig rearrangement" retrieved from STN Database accession no. 111:39493 CA XP002212054 & ORGANOMETALLICS (1989), 8(7), 1593-8 , 1989,
- DATABASE CA [Online] CHEMICAL ABSTRACTS SERVICE, COLUMBUS, OHIO, US; BUCHWALD, STEPHEN L. ET AL: "Synthesis, structure, and reactions of (1-ethoxyethyl)zirconocene chloride, a stable acyclic secondary zirconocene alkyl" retrieved from STN Database accession no. 109:190513 CA XP002212055 & ORGANOMETALLICS (1988), 7(11), 2324-8 , 1988,
- DATABASE CA [Online] CHEMICAL ABSTRACTS SERVICE, COLUMBUS, OHIO, US; ARNOLD, JOHN ET AL: "Reaction of an early-transition metal.eta.2-silaacyl complex with pyridine. Diastereoselectivity in the formation of a (2-pyridyl)silylmethoxy ligand" retrieved from STN Database accession no. 109:110568 CA XP002212056 & ORGANOMETALLICS (1988), 7(9), 2045-9 , 1988,
- DATABASE CA [Online] CHEMICAL ABSTRACTS SERVICE, COLUMBUS, OHIO, US; CHOUKROUN, R. ET AL: "Zirconium(III) chemistry: influence of olefins in thermolytic behavior of (Cp2ZrHX)n (X = Cl, CH2PPh2)" retrieved from STN Database accession no. 112:139281 CA XP002212057 & POLYHEDRON (1989), 8(13-14), 1758-9 , 1989,
- DATABASE CA [Online] CHEMICAL ABSTRACTS SERVICE, COLUMBUS, OHIO, US; CHOUKROUN, ROBERT ET AL: "Substituted cyclopentadienyl phosphinomethyl complexes of zirconium. Synthesis, chemical characteristics, complexation with rhodium complexes, and catalytic properties. Molecular and crystal structure of (.eta.5-tert-BuC5H4)2Zr(CH2PPh2)2[Rh2(.mu. -S-tert- Bu)2(CO)2]" retrieved from STN Database accession no. 113:6573 CA XP002212058 & ORGANOMETALLICS (1990), 9(6), 1982-7 , 1990,
- AULBACH M.; KUEBER F.: 'METALLOCENE - MASSGESCHNEIDERTE WERKZEUGE ZUR HERSTELLUNG VON POLYOLEFINEN' CHEMIE IN UNSERER ZEIT Bd. 28, Nr. 4, 01 Januar 1994, Seiten 197 - 208, XP001181136

## Beschreibung

Die vorliegende Erfindung betrifft eine Übergangsmetallverbindung, die in eine zwitterionische, neutrale Übergangsmetallverbindung übergeführt werden kann, welche vorteilhaft zur Polymerisation von Olefinen eingesetzt werden kann. Hierbei kann auf die Verwendung von Aluminoxanen wie Methylaluminoxan (MAO) als Cokatalysator verzichtet werden und dennoch hohe Katalysatoraktivitäten erzielt werden.

Die Rolle von kationischen 14-Elektronen-Komplexen der allgemeinen Formel R₃M⁺ (M = Ti, Zr, Hf) bei der Ziegler-Natta-Polymerisation mit Metallocenen ist allgemein anerkannt (M. Bochmann, Nachr.Chem.Lab.Techn. 1993, 41, 1220).

Während MAO als bislang wirksamster Cokatalysator in hohem Überschuß eingesetzt werden muß, eröffnet die Synthese kationischer Alkylkomplexe der allgemeinen Formel R₃M⁺ (M = Ti, Zr, Hf) einen Weg zu MAO-freien Katalysatoren mit teilweise vergleichbarer Aktivität.

Kationische Alkylkomplexe können hergestellt werden durch
a) Oxidation von Metallocendialkyl-Komplexen mit beispielsweise AgBPh₄ oder [Cp₂Fe][BPh₄],
b) durch Protolyse von Metallocenalkylverbindungen mit beispielsweise schwach sauren Ammoniumsalzen des sehr stabilen, nicht basischen Tetra(pentafluorophenyl)boratanions (z.B. [PhMe₂NH]⁺[B(C₆F₅)₄]⁻) oder durch
c) Abstraktion einer Alkylgruppe aus Metallocenalkylverbindungen mit Hilfe von starken Lewis-Säuren. Als Lewis-Säuren können dabei Salze verwendet werden (Ph₃C⁺BR₄⁻) oder auch starke neu trale Lewis-Säuren wie B(C₆F₅)₃.

In J.Organomet.Chem. 1970, 22, 659, wird eine Reaktion von Tetramethyltitanium mit Triphenylboran bzw. Tribenzylboran beschrieben.

In J.Am.Chem.Soc. 1991, 113, 3623, wird die Synthese von "Kationen-ähnlichen" Metallocen-Polymerisationskatalysatoren beschrieben, die durch Alkylabstraktion von Metallocenalkylverbindungen mit Tris(pentafluorophenyl)boran dargestellt werden. Die Kristallstruktur von [1,2-(CH₃)₂C₅H₃]₂ZrCH₃]⁺[CH₃B(C₆F₅)₃]⁻ zeigt eine salzartige Struktur mit schwach koordinierender CH₃-Gruppe des Boratanions an das Metallzentrum. In EP 427,697 wird dieses Syntheseprinzip und ein entsprechendes Katalysatorsystem, bestehend aus einer neutralen Metallocenspezies (z.B. Cp₂ZrMe₂), einer Lewis-Säure (z.B. B(C₆F₅)₃) und Aluminiumalkylen beansprucht. In EP 520,732 wird ein Verfahren zur Herstellung von Salzen der allgemeinen Formel LMX⁺XA⁻ nach oben beschriebenem Prinzip beansprucht.

EP 558,158 beansprucht zwitterionische Katalysatorsysteme, die aus Metallocendialkyl-Verbindungen und Salzen der Formel [R₃NH]⁺[BPh₄]⁻ dargestellt werden. Durch Umsetzung eines solchen Salzes mit Cp^{*}₂ZrMe₂ wird durch Protolyse unter Methanabspaltung intermediär ein Zirkonocenmethyl-Kation generiert, welches nach C-H-Aktivierung einer Tetraphenylborat-Kohlenstoff-Wasserstoff-Bindung und abermaliger Methanabspaltung zum Zwitterion Cp*₂Zr⁺-(m-C₆H₄)-B⁻Ph₃ abreagiert. Das Zr-Atom ist dabei kovalent an ein Kohlenstoffatom des Phenylringes gebunden und wird über eine agostische Wasserstoffbindung stabilisiert. Nach diesem Reaktionsprinzip entsteht nach Protolyse einer Metallocendialkylspezies mit einem perfluorierten [R₃NH]⁺[B(C₆F₅)₄]⁻ -Salz im ersten Schritt ebenfalls einer kationischen Spezies, wobei nun die Folgereaktion (C-H-Aktivierung) zu zwitterionischen Komplexen (d.h. das Metallatom ist kovalent an das "ehemalige" Anion gebunden) nicht möglich ist. Hierin werden auch Metallocene Cp₂MR₂ eingesetzt, bei denen die Alkylreste R zyklisch miteinander verbunden sind, z.B. Cp₂Zr(2,3-dimethyl-1,3-butadien). Dabei entstehen nach Protonolyse Salze der Form [Cp₂Zr-R-RH]⁺[B(C₆F₅)₄]⁻.

In US 5,198,401 werden entsprechende Systeme beansprucht, wobei Dimethylaniliniumsalze mit perfluorierten Tetraphenylboratanionen verwendet werden. Hierin werden auch Metallocene Cp₂MR₂ eingesetzt, bei denen die Alkylreste R zyklisch miteinander verbunden sind, z.B. Cp₂Zr(2,3-dimethyl-1,3-butadien). Dabei entstehen nach Protonolyse ebenfalls Salze der Form [Cp₂Zr-R-RH]^{+[B(C}₆F₅)₄]⁻. In EP 277,003, EP 277,004, EP 495,375 und WO 91/14713 werden Systeme nach ähnlichem Verfahrensprinzip beansprucht.

Die beschriebenen Verfahren zur Darstellung der kationischen Systeme der Formel [R₃M]⁺[BR₄]⁻ (M = Ti, Zr, Hf) haben den Nachteil, daß die kationisierenden Reagenzien (R₃NH⁺BR₄⁻) teilweise aufwendig zu synthetisieren und kostenintensiv sind. Zudem besteht das Problem, daß nach Protonolyse aus dem Ammoniumsalz ein Amin R₃N entsteht, das bei sterisch ungehinderten Metallzentren an das stark lewis-saure R₃M⁺-Kation koordinieren kann (US 5,198,401) und somit zu geringen Polymerisationsaktivitäten führt.

Die zwitterionischen Komplexe der Struktur Cp₂Zr⁺-m-C₆H₄B⁻Ph₃ haben den Nachteil, daß die Ausgangsverbindungen teuer und aufwendig zu synthetisieren sind und niedrige Polymerisationsaktivität zeigen.

Kationische Systeme der Struktur [Cp₂MR]⁺[RB(C₆F₅)₃]⁻ zeigen aufgrund des salzartigen Charakters sehr hohe Hydrolyseempfindlichkeiten und lassen sich nur beschränkt in technischem Maßstab einsetzen. Die mit diesen Systemen beobachteten Aktivitäten sind aufgrund der bereits genannten Stabilitätsprobleme und der vermutliche teilweise stark koordinierenden Alkylgruppe des Boratanions an das Metallzentrum niedrig.

Es bestand nun die Aufgabe, eine Übergangsmetallverbindung zu finden, welche die Nachteile des Standes der Technik vermeidet.

Es wurde nun gefunden, daß diese Aufgabe gelöst werden kann durch spezielle Übergangsmetallverbindungen.

Die vorliegende Erfindung betrifft daher eine Übergansmetallverbindung der Formel I, 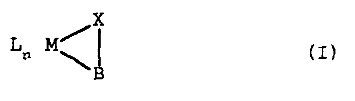 worin
- M: Zirkonium ist,
- n: gleich 2 ist,
- L: gleich oder verschieden sind und eine substituierte Cyclopentadienylgruppe bedeuten, wobei zwei Reste L über eine Verbrückung Z miteinander verbunden sind, und Z CR²R³ oder SiR²R³ ist, wobei R² und R³ gleich oder verschieden sind und ein Wasserstoffatom, ein Halogenatom, eine C₁-C₂₀-Alkyl-, eine C₁-C₁₀-Fluoralkyl-, eine C₁-C₁₀-Alkoxy-, eine C₆-C₁₄-Aryl-, eine C₆-C₁₀-Fluoraryl-, eine C₆-C₁₀-Aryloxy-, eine C₂-C₁₀-Alkenyl-, eine C₇-C₄₀-Arylalkyl-, eine C₇-C₄₀-Alkylaryl-, eine C₈-C₄₀-Arylalkenyl-gruppe bedeuten und x eine Zahl von Null bis 18 ist, oder R² und R³ jeweils mit den sie verbindenden Atomen einen oder mehrere Ringe bilden und R² oder/und R³ an L gebunden sein können,
- X und B: zusammen eine ungesättigte viergliedrige (C₄-)Alkylkette bilden, deren Wasserstoffatome auch durch C₁-C₂₀-Alkylgruppen substituiert sein können.

Die Herstellung der erfindungsgemäßen Übergangsmetallverbindung der Formel I soll durch das nachfolgende Reaktionsschema veranschaulicht werden.

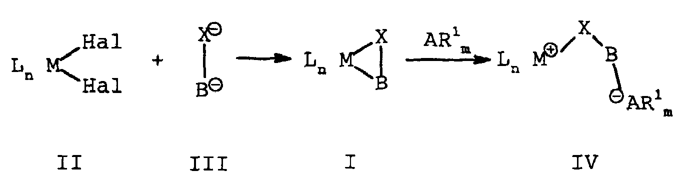

Dabei haben L, n, M, X, B in den Formeln II, III und IV die gleiche Bedeutung wie in Formel I und Hal ist ein Halogenatom wie Fluor, Chlor, Brom oder Jod.

Verbindungen der Formel II sind in der Literatur beschrieben (J. Okuda, Topics in Current Chemistry, Vol. 160; Springer Verlag, Berlin Heidelberg 1991, Seite 97). Umsetzung von Verbindungen der Formel II in inerten Lösungsmitteln mit Dianionverbindungen der Formel III, wie z.B. 1,4-Butandiyllithium-2-Buten
-1,4-diylmagnesium führen unter Salzabspaltung zur Bildung der cyclischen Systeme I, in denen die M-X- bzw. die M-B-Bindung eine kovalente Bindung, aber auch eine Koordination der Verbindung X-B an Metallatom M bedeuten kann.

Die Verbindung der Formel I kann mit Lewis-Säuren der allgemeinen Formel AR¹ₘ , worin A ein Metallatom der Gruppe Ib, IIb, IIIa, IIIb, IVa, Va, Vb, VIb, VIIb, oder VIIIb des Periodensystems der Elemente ist, R¹ gleich oder verschieden sind und einen perhalogenierten C₁-C₄₀-Kohlenwasserstoffrest bedeuten und m = 1, 2, 3, 4 oder 5 ist, in organischen Lösungsmitteln, wie z.B. Toluol, Benzol, Methylenchlorid, Tetrachlorkohlenstoff und Benzin, zur Verbindung der Formel IV umgesetzt werden (siehe obiges Schema).

Die erfindungsgemäßen Übergangsmetallverbindungen der Formel IV können isoliert oder direkt für weitere Reaktionen eingesetzt werden. Die Verbindungen der Formel IV können auch ohne Isolierung von Zwischen- und Endstufen in einer Eintopfreaktion aus Metallocendihalogeniden, Dianionverbindungen und Lewis-Säuren dargestellt und direkt für die Polymerisation eingesetzt werden.

Geeignete Lösungsmittel hierfür sind aliphatische oder aromatische Lösemittel, wie Hexan oder Toluol oder halogenierte Kohlenwasserstoffe wie Methlylenchlorid oder halogenierte aromatische Kohlenwasserstoffe wie o-Dichlorbenzol.

Eine weitere Möglichkeit zur Darstellung der erfindungsgemäßen Verbindungen der Formel IV besteht in der Bildung von Metallacyclen der Formel I durch elektrocyclische Ringschlussreaktion von z.B. Metallocenbisolefinkomplexen oder Metallocen-Olefin-Aldehyd-Komplexen und anschließender Umsetzung mit AR¹ₘ.

Die erfindungsgemäßen Übergangsmetallverbindungen können verwendet werden in einem Verfahren zur Herstellung eines Olefinpolymers durch Polymerisation mindestens eines Olefins in Gegenwart eines Katalysators, enthaltend mindestens eine Übergangsmetallverbindung der Formel IV. Die Polymerisation kann eine Homo- oder Copolymerisation sein.

Bevorzugt werden Olefine der Formel R^{a}-CH=CH-R^{b} polymerisiert, worin R^{a} und R^{b} gleich oder verschieden sind und ein Wasserstoffatom, ein Halogenatom, eine Alkoxy-, Hydroxy-, Alkylhydroxy-, Aldehyd-, Carbonsäure- oder Carbonsäureestergruppe oder einen gesättigten oder ungesättigten Kohlenwasserstoffrest mit 1 bis 20 C-Atomen, insbesondere 1 bis 10 C-Atomen bedeuten, der mit einer Alkoxy-, Hydroxy-, Alkylhydroxy-, Aldehyd-, Carbonsäure- oder Carbonsäureestergruppe substituiert sein kann, oder R^{a} und R^{b} mit den sie verbindenden Atomen einen oder mehrere Ringe bilden. Beispiele für solche Olefine sind 1-Olefine wie Ethylen, Propylen, 1-Buten, 1-Hexen, 4-Methyl-1-penten, 1-Octen, Styrol, cyclische Olefine wie Norbornen, Vinylnorbornen, Tetracyclododecen, Ethylidennorbornen, Diene wie 1,3-Butadien oder 1,4-Hexadien, Biscyclopentadien oder Methacrylsäuremethylester. Insbesondere werden Propylen oder Ethylen homopolymerisiert, Ethylen mit einem oder mehreren C₃-C₂₀-1-Olefinen, insbesondere Propylen, und/oder einem oder mehreren C₄-C₂₀-Dienen, insbesondere 1,3-Butadien, copolymerisiert oder Norbornen und Ethylen copolymerisiert.

Die Polymerisation wird bevorzugt bei einer Temperatur von -60 bis 300°C, besonders bevorzugt 30 bis 250°C, durchgeführt. Der Druck beträgt 0,5 bis 2500 bar, bevorzugt 2 bis 1500 bar. Die Polymerisation kann kontinuierlich oder diskontinuierlich, ein- oder mehrstufig, in Lösung, in Suspension, in der Gasphase oder in einem überkritischen Medium durchgeführt werden.

Es können auch Mischungen von zwei oder mehr Übergangsmetall-Verbindungen der Formel I verwendet werden. Hierdurch können Polyolefine mit breiter oder multimodaler Molekulargewichtsverteilung erhalten werden.

Als Molmasseregler und/oder zur Steigerung der Aktivität wird, falls erforderlich, Wasserstoff zugegeben. Der Gesamtdruck im Polymerisationssystem beträgt 0,5 bis 2500 bar, bevorzugt 2 bis 1500 bar.

Die erfindungsgemäßen Verbindungen der Formel IV sind hochaktive Katalysatorkomponenten für die Olefinpolymerisation.

Grundsätzlich ist der Einsatz von Cokatalysatoren in der Polymerisationsreaktion nicht erforderlich, d.h., die erfindungsgemäßen Verbindungen der Formel IV können als Katalysator für die Olefinpolymerisation verwendet werden, ohne daß es eines Cokatalysators wie Aluminoxan bedarf.

Die nachfolgenden Beispiele dienen zur näheren Erläuterung der Erfindung.

Allgemeine Angaben: Herstellung und Handhabung organometallischer Verbindungen erfolgten unter Ausschluß von Luft und Feuchtigkeit unter Argon-Schutz (Schlenk-Technik). Alle benötigten Lösungsmittel wurden vor Gebrauch durch mehrstündiges Sieden über einem geeigneten Trockenmittel und anschließende Destillation unter Argon absolutiert.

Die Verbindungen wurden mit ¹H-NMR, ¹³C-NMR und IR-Spektroskopie charakterisiert.

### A. Synthese der Verbindungen der Formel I

Die Darstellung der Butadienkomplexe erfolgte nach G. Erker, K. Engel, Ch. Sarter in R.B. King, J.J. Eisch, Organometallic Synthesis, Vol 3, Academic Press, New York 1986, 529:

### Beispiel 1:

### Dimethylsilandiyl-bis(2-methyl-4,5-benzoidenyl)zirconium(η⁴-butadien):

Zu einer auf -40°C gekühlten Mischung von 5,0 g (8,67 mmol) Dimethylsilandiyl-bis(2-methyl-4,5-benzoindenyl)zirconiumdichlorid und 2,3 g (10,4 mmol, 1,2 Äquivalente) (2-Buten-1,4-diyl)(magnesium-bistetrahydrofuran ("Butadienmagnesium") werden 100 ml Toluol (vorgekühlt auf -40°C) zugegeben. Man läßt die Mischung unter starkem Rühren langsam auf Raumtemperatur erwärmen. Nach vier Stunden Rühren wird die dunkelrote Lösung über ein Fritte von nicht umgesetztem Butadienmagnesium und gebildetem Magnesiumchlorid abgetrennt. Das Filtrat wird zur Trocknung eingeengt und der Rückstand mit 10 ml Pentan gewaschen. Man erhält 4,4 g (70 %) eines tiefroten Pulvers.

### Beispiel 2:

### Dimethylsilandiyl-bis(2-methyl-4-phenylindenyl)zirconium(η⁴-butadien):

Zu einer auf -40°C gekühlten Mischung von 5,0 g (7,95 mmol) Dimethylsilandiyl-bis(2-methyl-4-phenylindenyl)zirconiumchlorid und 2,1 g (9,5 mmol, 1,2 Äquivalente) (2-Buten-1,4-diyl)magnesium-bistetrahydrofuran ("Butadienmagnesium") werden 100 ml Toluol (vorgekühlt auf -40°C) zugegeben. Man läßt die Mischung unter starkem Rühren langsam auf Raumtemperatur erwärmen. Nach vier Stunden Rühren wird die dunkelrote Lösung über eine Fritte von nicht umgesetztem Butadienmagnesium und gebildetem Magnesiumchlorid abgetrennt. Das Filtrat wird zur Trocknung eingeengt und der Rückstand mit 10 ml Pentan gewaschen. Man erhält 3,5 g (72 %) eines braunroten Pulvers.

### B. Synthese der Verbindungen der Formel IV:

### Beispiel 3:

### Dimethylsilaniyl-bis(2-methyl-4,5-benzoindenyl) ZRCH₂CHCHCH₂B⁻(C₆F₅)₃

3,0 g (5,35 mmol) Dimethylsilaniyl-bis(2-methyl-4,5-benzoindenyl)zirconium(η⁴-butadien) werden in 100 ml Toluol gelöst und mit 3,01 g (5,88 mmol, 1,1 Äquivalente) Tris(pentafluorophenyl)boran versetzt. Man läßt die Reaktionslösung 24 Stunden bei Raumtemperatur rühren und engt anschließend die stark dunkelbraun gefärbte Suspension auf die Hälfte des Volumens ein. Der Niederschlag wird abfiltriert und mit 10 ml Pentan nachgewaschen. Man erhält 5,27 g (92 %) eines schwerlöslichen rotbraun gefärbten Pulvers.

### Beispiel 4:

### Dimethylsilaniyl-bis(2-methyl-4-phenylindenyl)ZrCH₂CHCHCH₂B⁻(C₆F₅)₃

3,0 g (4,90 mmol) Dimethylsilaniyl-bis(2-methyl-4-phenylindenyl)zirconium(η⁴-butadien) werden in 100 ml Toluol gelöst und mit 2,76 g (5,39 mmol, 1,1 Äquivalente) Tris(pentafluorophenyl)boran versetzt. Man läßt die Reaktionslösung 24 Stunden bei Raumtemperatur rühren und engt anschließend die stark dunkelbraun gefärbte Suspension auf die Hälfte des Volumens ein. Der Niederschlag wird abfiltriert und mit 10 ml Pentan nachgewaschen. Man erhält 4,84 g (88 %) eines schwerlöslichen rotbraun gefärbten Pulvers.

### C. Polymerisationsbeispiele

### Beispiel 5:

In einem 1,5 dm³-Autoklav, der vorher gründlich mit Ethen gespült wurde, werden 600 cm³ einer 85 Gew.-%igen Lösung von Norbornen in Toluol vorgelegt. Durch mehrfaches Aufdrücken von Ethen (18 bar) wurde die Lösung mit Ethen gesättigt. In den so vorbereiteten Reaktor wurde eine Suspension von 2,28 mg 4-(η⁵-Cyclopentadienyl)-4,7,7-trimethyl-(η⁵-4,5,6,7-tetrahydroindenyl) ZrCH₂CHCHCH₂B⁻(C₆F₅)₃ in 10 ml Toluol zugegeben (im Fall einer Wasserstoffregelung kann an dieser Stelle Wasserstoff aufgepreßt werden). Unter Rühren wurde eine Stunde polymerisiert, wobei der Ethendruck durch Nachdosieren bei 18 bar gehalten wurde. Nach Ende der Reaktionszeit wurde das Polymerisationsgemisch in ein Gefäß abgelassen und sofort in 5 dm³ Aceton eingetragen, 10 min gerührt und anschließend das ausgefallene Produkt filtriert. Der Filterkuchen wurde je dreimal abwechselnd mit 10 %iger Salzsäure und Aceton gewaschen. Abschließend wurde mit Wasser neutral gewaschen, der Rückstand in Aceton aufgeschlämmt und erneut filtriert. Das so gereinigte Polymer wurde bei 80°C im Vakuum (0,2 bar) 15 Stunden getrocknet. Nach der Trocknung wurden 224 g farbloses Polymer erhalten, welches eine Glastemperatur von 179°C, eine Viskositätszahl von 52 cm³/g, eine Reißspannung von 59 MPa und eine Reißdehnung von 3,1 % aufwies. Die Aktivität betrug 80,5 kg Polymer/h x mmol.

### Beispiel 6:

10 mg (17,9 µmol) rac-Dimethylsilandiyl-bis(2-methyl-4,5-benzo-1-indenyl)zirconium-(η⁴-butadien) wurden in 10 ml Toluol gelöst und mit 10 ml einer Lösung von 9,2 mg (18 µmol) B(C₆F₅)₃ in Toluol versetzt. Die Bildung des Katalysators ist am Auftreten einer Trübung bzw. eines dunklen Niederschlages zu erkennen. Die Polymerisation erfolgte analog zu Beispiel 5 bei 70°C. Das überschüssige Monomer wurde abgegast und das Polymerpulver im Vakuum getrocknet. Es resultierten 2500 g isotaktisches Polypropylen-Pulver.
Die Katalysatoraktivität betrug 250 kg PP/(g Metallocen X h).
VZ = 240 cm³/g, Schmp. = 148,7°C, Mw = 298000 g/mol, Mw/Mn = 2,2, MFI_{(230/2,16)} = 3,2 dg/min.

### Beispiel 7:

Die Herstellung der Katalysatorsuspension aus Beispiel 6 wurde wiederholt mit dem Unterschied, daß 3 mg (4,8 µmol) rac-Dimethylsilandiyl-bis(2-methyl-4-phenyl-1-indenyl)zirconium-(η⁴-butadien) gelöst in 10 cm³ Toluol mit 2,5 mg (4,9 µmol) B(C₆F₅)₃ gelöst in 10 cm³ Toluol zur Reaktion gebracht wurden. Die Polymerisation erfolgte nach dem Eindosieren der Katalysatorsuspension in den Reaktor bei 60°C. Aus der Polymerisation resultierten 2250 g isotaktisches Polypropylen-Pulver. Die Katalysatoraktivität betrug 750 kg PP/(g Metallocen x h).
VZ = 620 cm³/g, Schmp. = 155°C, MFI_{(230/5)} = 0,35 dg/min.

### Beispiel 8:

Die Herstellung der Katalysatorsuspension aus Beispiel 6 wurde wiederholt mit dem Unterschied, daß 10 mg (21 µmol) rac-Dimethylsilandiyl-bis(2-methyl-1-indenyl)zirconium-(η⁴-butadien) gelöst in 10 cm³ Toluol mit 10,7 mg (21 µmol) B(C₆F₅)₃ gelöst in 10 cm³ Toluol zur Reaktion gebracht wurden. Aus der Polymerisation resultierten 1900 g isotaktisches Polypropylen-Pulver. Die Katalysatoraktivität betrug 190 kg PP/(g Metallocen x h).
VZ = 180 cm³/g, Schmp. = 145°C, Mw 192000 g/mol, Mw/Mn = 2,2, MFI_{(230/2,16)} = 12 dg/min.

### Beispiel 9:

Die Herstellung der Katalysatorsuspension aus Beispiel 6 wurde wiederholt mit dem Unterschied, daß 10 mg (20,2 µmol) Phenylmethylmethylenfluorenylcyclopentadienylzirkonium-(η⁴-butadie n) gelöst in 10 cm³ Toluol mit 10,7 mg (21 µmol) B(C₆F₅)₃ gelöst in 10 cm³ Toluol zur Reaktion gebracht wurden. Aus der Polymerisation resultierten 1100 g syndiotaktisches Polypropylen-Pulver. Die Katalysatoraktivität betrug 110 kg PP/(g Metallocen x h).
VZ = 137 cm³/g, Schmp. = 133°C, Mw = 122000 g/mol, Mw/Mn = 2,3.

### Beispiel 10:

In einem mehrmals mit Stickstoff gespülten 1500 ml Reaktor wurden 1000 ml einer 85 Gew.-%igen Lösung von Norbornen in Toluol gefüllt und auf 70°C aufgeheizt. Durch mehrfaches Aufdrücken von Ethylen (16 bar Überdruck) wurde die Lösung mit Ethylen gesättigt. In den entspannten Reaktor wurden im Ethylengegenstrom 2 ml einer 20 %igen toluolischen Triethylaluminiumlösung gegeben und anschließend 15 min gerührt.

### Katalysator-Vorbereitung:

Zu der Lösung von 9,0 mg (Butadiene)Isopropylen(1-indenyl)cyclopentadienylzirkonium (0,025 mmol) in 0,9 ml Toluol wurde eine Lösung von 12,6 mg Tris(pentafluorophenyl)borane (0,025 mmol) in 1,26 ml Toluol gegeben. Die Katalysatormischung wurde 25 min bei Raumtemperatur voraktiviert.

### Polymerisation und Isolierung:

In die vorbereitete Reaktionslösung wurde die Katalysatormischung gegeben und anschließend möglichst schnell ein Ethylendruck von 16 bar eingestellt. Unter Rühren bei ca. 750 UpM wurde 2 Stunden bei 70°C polymerisiert, wobei der Ethylendruck konstant bei 16 bar gehalten wurde. Zur Beendigung der Reaktion wurde zuerst der Reaktor entspannt und anschließend die Reaktionslösung in ein Gefäß abgelassen. Das Polymer wurde in 2500 ml Aceton gefällt und nach 5 min Rühren filtriert. Der Filterkuchen wurde mehrfach mit 10 %iger Salzsäure und Aceton im Wechsel gewaschen. Abschließend wurde mit Wasser neutral gewaschen und nach Zugabe von 1000 ml Aceton filtriert. Das so gereinigte Pulver wurde bei 80°C und einem Druck von 0,2 bar 15 Stunden getrocknet.

### Charakterisierung:

Nach dem Trocknen wurden 30 g farbloses Pulver erhalten; das entspricht einer Aktivität von 610 g Polymer/Stunde x mmol Metallocen. An dem Polymer wurde eine Viskositätszahl von 106 cm³/g und eine Glastemperatur von 135°C gemessen. Durch thermische Analyse konnte kein Schmelzpunkt nachgewiesen werden.

### Beispiel 11:

30 mg (31 µmol) rac-Dimethylsilandiyl-bis(2-methyl-1-indenyl) Zr⁺CH₂CHCHCH₂B⁻(C₆F₅)₃ werden in 30 ml Toluol gelöst. 10 g eines SiO₂ werden in die Katalysator-Lösung eingerührt, bis eine homogene Verteilung erreicht ist. Dann wird vom Lösungsmittel abfiltriert und noch zweimal mit 10 ml Toluol gewaschen.

Parallel dazu wurde ein trockener 16-dm³-Reaktor zunächst mit Stickstoff und anschließend mit Propylen gespült und mit 10 dm³ flüssigem Propylen befüllt. Dann wurden 15 cm³ Triisobutylaluminium (20 % in Kohlenwasserstoff, 12 mmol) in den Reaktor gegeben und der Ansatz bei 30°C 15 min gerührt. Anschließend wurde die Katalysator-Suspension in den Reaktor gegeben, auf die Polymerisationstemperatur von 70°C aufgeheizt (4°C/min) und das Polymerisationssystem 1 Stunde durch Kühlung bei 70°C gehalten. Gestoppt wurde die Polymerisation durch Zusatz von 20 ml Isopropanol. Das überschüssige Monomer wurde abgegast und Lösungsmittelreste im Vakuum abgezogen.

Aus der Polymerisation resultierten 2,5 kg isotaktisches Polypropylen-Pulver. Die Katalysatoraktivität betrug 83 kg PP/(g Metallocen x h).
VZ = 184 cm³/g, Schmp. = 145°C, Mw = 193000 g/mol, Mw/Mn = 2,2. Der Reaktor zeigte keine Beläge an Wänden oder Rührer.

### Beispiel 12:

Die Herstellung der Katalysatorsuspension aus Beispiel 6 wurde wiederholt mit dem Unterschied, daß 10 mg (24 µmol) Dimethylmethylen-9-fluorenylcyclopentadienylzirkonium-(4-butadien) gelöst in 10 cm³ Toluol mit 12,8 mg (25 µmol) B(C₆F₅)₃ gelöst in 10 cm³ Toluol zur Reaktion gebracht wurden. Die Polymerisation erfolgte nach dem Eindosieren der Katalysatorsuspension in den Reaktor bei 60°C. Aus der Polymerisation resultierten 900 g syndiotaktisches Polypropylen-Pulver.
Die Katalysatoraktivität betrug 90 kg PP/(g Metallocen x h).
VZ = 92 cm³/g, Schmp. = 126°C, Mw = 63000 g/mol, Mw/Mn = 2,1.

### Beispiel 13:

Die Herstellung der Katalysatorsuspension aus Beispiel 6 wurde wiederholt mit dem Unterschied, daß 5 mg (8 µmol) rac-Dimethylsilandiyl-bis(2-methyl-4,6-di-Isopropyl-1-indenyl)zirconium (4-butadien) gelöst in 10 cm³ Toluol mit 4,1 mg (8,1 µmol) B(C₆F₅)₃ gelöst in 10 cm³ Toluol zur Reaktion gebracht wurden. Die Polymerisation erfolgte nach dem Eindosieren der Katalysatorsuspension in den Reaktor bei 60°C. Aus der Polymerisation resultierten 2100 g isotaktisches Polypropylen-Pulver. Die Katalysatoraktivität betrug 420 kg PP/(g Metallocen x h).
VZ = 423 cm³/g, Schmp. = 154°C, MFI_{(230/5)} = 3,1 dg/min, Mw = 588000 g/mol, Mw/Mn = 3,5.

### Beispiel 14:

Die Herstellung der Katalysatorsuspension aus Beispiel 7 wurde wiederholt. Die Polymerisation erfolgte nach dem Eindosieren des Katalysatorsuspension in Reaktor bei 70°C. Aus der Polymerisation resultierten 2800 g isotaktisches Polypropylen-Pulver. Die Katalysatoraktivität betrug 933 kg PP/(g Metallocen x h).
VZ = 544 cm³/g, Schmp. = 154°C, MFI_{(230/5)} = 1,3 dg/min, Mw = 741000 g/mol, Mw/Mn = 2,8.

### Beispiel 15:

Die Herstellung der Katalysatorsuspension aus Beispiel 8 wurde wiederholt mit dem Unterschied, daß der 16-dm³-Reaktor mit 10 dm³ flüssigen Propylen und 2,5 Nl Wasserstoffgas befüllt wurde. Dann wurden 10 cm³ Triisobutylaluminium (20 % in Kohlenwasserstoff, 10 mmol) in den Reaktor gegeben und der Ansatz bei 30°C 15 min gerührt. Anschließend wurde die Katalysatorsuspension in den Reaktor gegeben, auf die Polymerisationstemperatur von 70°C aufgeheizt (4°C/min) und das Polymerisationssystem 1 Stunde durch Kühlung bei 70% gehalten. Aus der Polymerisation resultierten 3200 g isotaktisches Polyprolypen-Pulver. Die Katalysatoraktivität betrug 320 kg PP/(g Metallocen x h).
VZ = 164 cm³/g, Schmp. = 147°C, MFI_{(230/2,16)} = 25 dg/min.

### Beispiel 16:

Die Herstellung der Katalysatorsuspension aus Beispiel 6 wurde wiederholt mit dem Unterschied, daß 2 mg (3,1 µmol) rac-Dimethylsilandiyl-bis(2-ethyl-4-phenyl-1-indenyl)zirconium-(4-butadien) gelöst in 5 cm³ Toluol mit 1,7 mg (3,3 µmol) B(C₆F₅)₃ gelöst in 5 cm³ Toluol zur Reaktion gebracht wurden. Aus der Polymerisation resultierten 2150 g isotaktisches Polypropylen-Pulver.
Die Katalysatoraktivität betrug 1075 kg PP/(g Metallocen x h).
VZ = 656 cm³/g, Schmp. = 162°C, MFI_{(230/5)} = 0,8 dg/min, Mw = 957000 g/mol, Mw/Mn = 3,0.

### Beispiel 17:

Die Herstellung der Katalysatorsuspension aus Beispiel 6 wurde wiederholt mit dem Unterschied, daß 2 mg (2,8 µmol) rac-Dimethylsilandiyl-bis(2-methyl-4-naphtyl-1-indenyl)zirconium-(4-butadien) gelöst in 5 cm³ Toluol mit 1,4 mg (2,8 µmol) B(C₆F₅)₃ gelöst in 5 cm³ Toluol zur Reaktion gebracht wurden. Aus der Polymerisation resultierten 2500 g isotaktisches Polypropylen-Pulver.
Die Katalysatoraktivität betrug 1250 kg PP/(g Metallocen x h).
VZ = 777 cm³/g, Schmp. = 163°C, MFI_{(230/5)} = 0,5 dg/min, Mw = 1200000 g/mol, Mw/Mn = 3,2.

### Beispiel 18:

10 g Kieselgel (Davison 948), das bei 800°C konditioniert wurde, wurden mit 0,5 g B(C₆F₅)₃ gelöst in 15 cm³ Toluol versetzt und homogenisiert. Das Lösungsmittel wurde im Vakuum abgezogen. Es resultierte ein frei fließendes Pulver. 200 mg rac-Dimethylsilandiyl-bis(2-methyl-1-indenyl)zirconium-(4-butadien) (435 µmol) wurden in 15 cm³ Toluol gelöst und in kleinen Portionen auf das intensiv gerührte, frei fließende Pulver aufgetragen. Das Pulver nahm eine intensiv dunkelrote Farbe an. Anschließend wurde das Toluol im Vakuum abgezogen. Es resultierten 11,3 g geträgerter Katalysator als frei fließendes Pulver. 1,5 g des geträgerten Katalysators wurden in 10 ml Hexan suspendiert und in den Polymerisationsreaktor eingeschleust. Die Polymerisation erfolgte analog zu Beispiel A bei 70°C. Das überschüssige Monomer wurde abgesaugt und das Polymerpulver im Vakuum getrocknet. Es resultierten 2350 g isotaktisches Polypropylen-Pulver mit einer Schüttdichte von 0,44 g/ml und einem mittleren Korndurchmesser der Polymerkörper von 650 µm. Die Analyse des Polymers ergab
VZ = 172 cm³/g, Schmp. = 145°C, Mw = 192000 g/mol, Mw/Mn = 2,2, MFI_{(230/2,16)} = 13 dg/min.

### Beispiel 19 (Vergleichsbeispiel):

Die Herstellung der Katalysatorsuspension aus Beispiel 6 wurde wiederholt mit dem Unterschied, daß 5 mg (11,1 µmol) rac-Dimethylsilandiyl-bis-1-indenylzirconium-(η⁴-butadien) gelöst in 10 cm³ Toluol mit 5,7 mg (11,1 µmol) B(C₆F₅)₃ gelöst in 10 cm³ Toluol zur Reaktion gebracht wurden. Aus der Polymerisation resultierten 2200 g isotaktisches Polypropylen-Pulver.
Die Katalysatoraktivität betrug 440 kg PP/(g Metallocen x h).
VZ = 52 cm³/g, Schmp. = 140°C, Mw = 49000 g/mol, Mw/Mn = 2,2. 16,6 mg (40,7 µmol) rac-Dimethylsilandiyl-bis-1-indenylzirconiumdimethyl wurden in 10 cm³ Toluol mit 21 mg (41 µmol) B(C₆F₅)₃ gelöst in 10 cm³ Toluol zur Reaktion gebracht wurden. Es war keine Trübung oder Niederschlagsbildung zu beobachten. Die Katalysatorlösung wurde wie in Beispiel 9 zur Polymerisation eingesetzt. Es resultierten 130 g isotaktisches Polypropylen-Pulver.
Die Katalysatoraktivität betrug 8 kg PP/(g Metallocen x h).
VZ = 67 cm³/g, Schmp. = 139,5°C, Mw = 62000 g/mol, Mw/Mn = 2,1.

## Patentansprüche

1. Übergangsmetallverbindung der Formel I 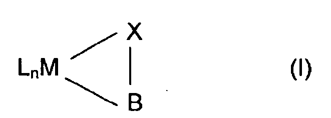 worin
M ein Zirkonium ist,
n gleich 2 ist,
L gleich oder verschieden sind und eine substituierte Cyclopentadiengruppe bedeuten, wobei zwei Reste L über eine Verbrückung Z miteinander verbunden sind, und
Z CR²R³ oder SiR²R³ ist, wobei R² und R³ gleich oder verschieden sind und ein Wasserstoffatom, ein Halogenatom, eine C₁-C₂₀-Alkyl-, eine C₁-C₁₀-Fluoralkyl-, eine C₁-C₁₀-Alkoxy-, eine C₆-C₁₄-Aryl-, eine C₆-C₂₀-Fluoraryl-, eine C₆-C₁₀-Aryloxy-, eine C₂-C₁₀-Alkenyl-, eine C₇-C₄₀-Arylalkyl-, eine C₇-C₄₀-Arylalkyl-, eine C₇-C₄₀-Alkylaryl-, eine C₈-C₄₀-Arylalkenylgruppe bedeuten oder R² und R³ jeweils mit den sie verbindenden Atomen einen oder mehrere Ringe bilden und R² und/oder R³ and L gebunden sein können,
X und B zusammen eine ungesättigte viergliedrige Alkylkette bilden, deren Wasserstoffatome auch durch C₁-C₂₀-Alkylgruppen substituiert sein können.

2. Verfahren zur Herstellung einer Verbindung der Formel 1 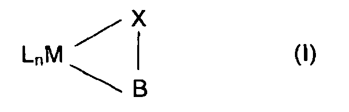 worin
M ein Zirkonium ist,
n gleich 2 ist,
L gleich oder verschieden sind und eine substituierte Cyclopentadiengruppe bedeuten, wobei zwei Reste L über eine Verbrückung Z miteinander verbunden sind, und
Z CR²R³ oder SiR²R³ ist, wobei R² und R³ gleich oder verschieden sind und ein Wasserstoffatom, ein Halogenatom, eine C₁-C₂₀-Alkyl-, eine C₁-C₁₀-Fluoralkyl-, eine C₁-C₁₀-Alkoxy-, eine C₆-C₁₄-Aryl-, eine C₆-C₂₀-Fluoraryl-, eine C₆-C₁₀-Aryloxy-, eine C₂-C₁₀-Alkenyl-, eine C₇-C₄₀-Arylalkyl-, eine C₇-C₄₀-Arylalkyl-, eine C₇-C₄₀-Alkylaryl-, eine C₈-C₄₀-Arylalkenylgruppe bedeuten oder R² und R³ jeweils mit den sie verbindenden Atomen einen oder mehrere Ringe bilden und R² und/oder R³ and L gebunden sein können,
X und B zusammen eine ungesättigte viergliedrige Alkylkette bilden, deren Wasserstoffatome auch durch C₁-C₂₀-Alkylgruppen substituiert sein können,
wobei eine Verbindung der Formel II 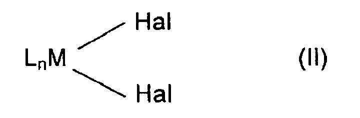 mit einer Verbindung der Formel III 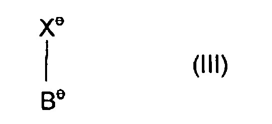 umgesetzt wird, worin L, n, M, X, B in den Formeln II und III die gleiche Bedeutung haben wie Formel I und Hal ein Halogenatom bedeutet.

3. Verwendung einer Übergangsmetallverbindung der Formel I 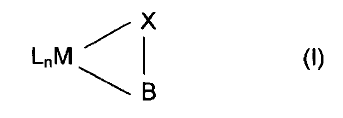 worin
M ein Zirkonium ist,
n gleich 2 ist,
L gleich oder verschieden sind und eine substituierte Cyclopentadiengruppe bedeuten, wobei zwei Reste L über eine Verbrückung Z miteinander verbunden sind, und
Z CR²R³ oder SiR²R³ ist, wobei R² und R³ gleich oder verschieden sind und ein Wasserstoffatom, ein Halogenatom, eine C₁-C₂₀-Alkyl-, eine C₁-C₁₀-Fluoralkyl-, eine C₁-C₁₀-Alkoxy-, eine C₆-C₁₄-Aryl-, eine C₆-C₂₀-Fluoraryl-, eine C₆-C₁₀-Aryloxy-, eine C₂-C₁₀-Alkenyl-, eine C₇-C₄₀-Arylalkyl-, eine C₇-C₄₀-Arylalkyl-, eine C₇-C₄₀-Alkylaryl-, eine C₈-C₄₀-Arylalkenylgruppe bedeuten oder R² und R³ jeweils mit den sie verbindenden Atomen einen oder mehrere Ringe bilden und R² und/oder R³ and L gebunden sein können,
X und B zusammen eine ungesättigte viergliedrige Alkylkette bilden, deren Wasserstoffatome auch durch C₁-C₂₀-Alkylgruppen substituiert sein können,
zur Herstellung eines Katalysators für die Olefinpolymerisation.

## Claims

1. A transition metal compound of the formula I 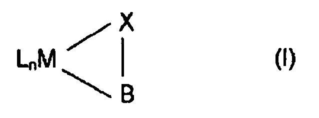 where
M is zirconium,
n is 2,
the radicals L are identical or different and are each a substituted cyclopentadiene group, with two radicals L being joined to one another via a bridge Z, and
Z is CR²R³ or SiR²R³, where R² and R³ are identical or different and are each a hydrogen atom, a halogen atom, a C₁-C₂₀-alkyl group, a C₁-C₁₀-fluoroalkyl group, a C₁-C₁₀-alkoxy group, a C₆-C₁₄-aryl group, a C₆-C₂₀-fluoroaryl group, a C₆-C₁₀-aryloxy group, a C₂-C₁₀-alkenyl group, a C₇-C₄₀-arylalkyl group, a C₇-C₄₀-arylalkyl group, a C₇-C₄₀-alkylaryl group, a C₈-C₄₀-arylalkenyl group or R² and R³ together with the atoms connecting them form one or more rings and R² and/or R³ and L may be joined,
X and B together form an unsaturated four-membered alkyl chain whose hydrogen atoms may also be replaced by C₁-C₂₀-alkyl groups.

2. A process for preparing a compound of the formula I 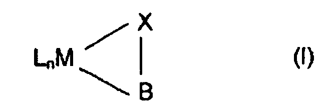 where
M is zirconium,
n is 2,
the radicals L are identical or different and are each a substituted cyclopentadiene group, with two radicals L being joined to one another via a bridge Z, and
Z is CR²R³ or SiR²R³, where R² and R³ are identical or different and are each a hydrogen atom, a halogen atom, a C₁-C₂₀-alkyl group, a C₁-C₁₀-fluoroalkyl group, a C₁-C₁₀-alkoxy group, a C₆-C₁₄-aryl group, a C₆-C₂₀-fluoroaryl group, a C₆-C₁₀-aryloxy group, a C₂-C₁₀-alkenyl group, a C₇-C₄₀-arylalkyl group, a C₇-C₄₀-arylalkyl group, a C₇-C₄₀-alkylaryl group, a C₈-C₄₀-arylalkenyl group or R² and R³ together with the atoms connecting them form one or more rings and R² and/or R³ and L may be joined,
X and B together form an unsaturated four-membered alkyl chain whose hydrogen atoms may also be replaced by C₁-C₂₀-alkyl groups,
wherein a compound of the formula II 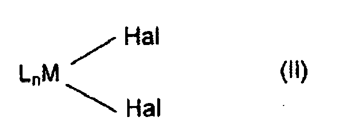 is reacted with a compound of the formula III 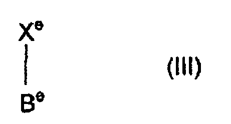 where L, n, M, X, B in the formulae II and III have the same meanings as in formula I and Hal is a halogen atom.

3. The use of a transition metal compound of the formula I 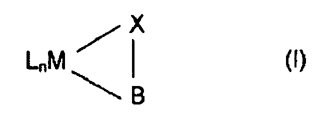 where
M is zirconium,
n is 2,
the radicals L are identical or different and are each a substituted cyclopentadiene group, with two radicals L being joined to one another via a bridge Z, and
Z is CR²R³ or SiR²R³, where R² and R³ are identical or different and are each a hydrogen atom, a halogen atom, a C₁-C₂₀-alkyl group, a C₁-C₁₀-fluoroalkyl group, a C₁-C₁₀-alkoxy group, a C₆-C₁₄-aryl group, a C₆-C₂₀-fluoroaryl group, a C₆-C₁₀-aryloxy group, a C₂-C₁₀-alkenyl group, a C₇-C₄₀-arylalkyl group, a C₇-C₄₀-arylalkyl group, a C₇-C₄₀-alkylaryl group, a C₈-C₄₀-arylalkenyl group or R² and R³ together with the atoms connecting them form one or more rings and R² and/or R³ and L may be joined,
X and B together form an unsaturated four-membered alkyl chain whose hydrogen atoms may also be replaced by C₁-C₂₀-alkyl groups,
for preparing a catalyst for olefin polymerization.

## Revendications

1. Composé de métal de transition de formule I 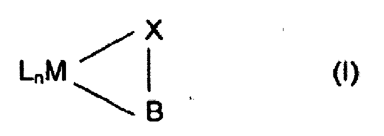 dans laquelle
M est un atome de zirconium,
n est égal à 2,
les L sont identiques ou différents et désignent un groupe cyclopentadiène substitué, les deux radicaux L étant liés l'un à l'autre par un pont Z, et
Z est CR²R³ ou SiR²R³, R² et R³ étant identiques ou différents et désignent un atome d'hydrogène, un atome d'halogène, un groupe alkyle en C₁-C₂₀, fluoroalkyle en C₁-C₁₀, alcoxy en C₁-C₁₀, aryle en C₆-C₁₄, fluoroaryle en C₆-C₂₀, aryloxy en C₆-C₁₀, alcényle en C₂-C₁₀, arylalkyle en C₇-C₄₀, arylalkyle en C₇-C₄₀, alkylaryle en C₇-C₄₀, arylalcényle en C₈-C₄₀ ou R² et R³ forment respectivement, avec les atomes les reliant, un ou plusieurs cycles et R² et/ou R³ et L peuvent être liés,
X et B forment conjointement une chaîne alkyle à quatre chaînons insaturée dont les atomes d'hydrogène peuvent également être substitués par des groupes alkyle en C₁ à C₂₀.

2. Procédé de production d'un composé de formule I 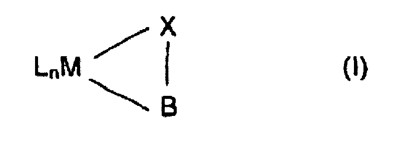 dans laquelle
M est un atome de zirconium,
n est égal à 2,
les L sont identiques ou différents et désignent un groupe cyclopentadiène substitué, les deux radicaux L étant liés l'un à l'autre par un pont Z, et
Z est CR²R³ ou SiR²R³, R² et R³ étant identiques ou différents et désignent un atome d'hydrogène, un atome d'halogène, un groupe alkyle en C₁-C₂₀, fluoroalkyle en C₁-C₁₀, alcoxy en C₁-C₁₀, aryle en C₆-C₁₄, fluoroaryle en C₆-C₂₀, aryloxy en C₆-C₁₀, alcényle en C₂-C₁₀, arylalkyle en C₇-C₄₀, arylalkyle en C₇-C₄₀, alkylaryle en C₇-C₄₀, arylalcényle en C₈-C₄₀ ou R² et R³ forment respectivement, avec les atomes les reliant, un ou plusieurs cycles et R² et/ou R³ et L peuvent être liés,
X et B forment conjointement une chaîne alkyle à quatre chaînons insaturée dont les atomes d'hydrogène peuvent également être substitués par des groupes alkyle en C₁-C₂₀, un composé de formule II 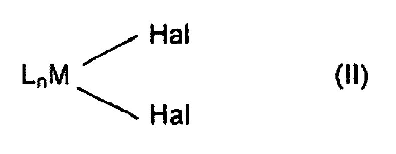 étant converti avec un composé de formule III 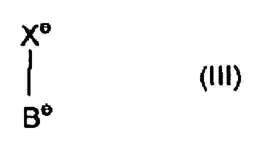
L, n, M, X, B dans les formules II et III ayant la même signification que dans la formule I et Hal désignant un atome d'halogène.

3. Utilisation d'un composé de métal de transition de formule I 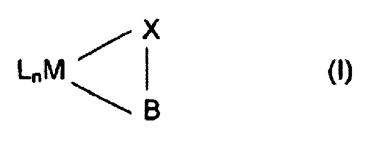 dans laquelle
M est un atome de zirconium,
n est égal à 2,
les L sont identiques ou différents et désignent un groupe cyclopentadiène substitué, les deux radicaux L étant liés l'un à l'autre par un pont Z, et
Z est CR²R³ ou SiR²R³, R² et R³ étant identiques ou différents et un atome d'hydrogène, un atome d'halogène, un groupe alkyle en C₁-C₂₀, fluoroalkyle en C₁-C₁₀, alcoxy en C₁-C₁₀, aryle en C₆-C₁₄, fluoroaryle en C₆-C₂₀, aryloxy en C₆-C₁₀, alcényle en C₂-C₁₀, arylalkyle en C₇-C₄₀, arylalkyle en C₇-C₄₀, alkylaryle en C₇-C₄₀, arylalcényle en C₈-C₄₀ ou R² et R³ forment respectivement, avec les atomes les reliant, un ou plusieurs cycles et R² et/ou R³ et L peuvent être liés,
X et B forment conjointement une chaîne alkyle à quatre chaînons insaturée dont les atomes d'hydrogène peuvent également être substitués par des groupes alkyle en C₁ à C₂₀,
pour la production d'un catalyseur pour la polymérisation d'oléfines.
